# EUROPEAN PATENT APPLICATION

(11) **EP 2 922 005 A1**
(43) Date of publication of application: **23.09.2015**
(21) Application number: 15159888.5
(22) Date of filing: 19.03.2015
(51) Int. Cl.: G06Q 20/32, G06Q 20/06, G06Q 20/04, G06Q 20/34

(54) **METHOD AND APPARATUS FOR ISSUING ELECTRONIC MONEY AT ELECTRONIC DEVICE**

(30) Priority: 20.03.2014 KR 20140032629
(71) Applicant: Samsung Electronics Co., Ltd, Gyeonggi-do 443-742 (KR)
(72) Inventor: Park, Jihea, Suwon-si Gyeonggi-do 443-742 (KR); Choi, Youngkeun, Suwon-si Gyeonggi-do 443-742 (KR); Song, Sejun, Suwon-si Gyeonggi-do 443-742 (KR); Kim, Jeonghun, Suwon-si Gyeonggi-do 443-742 (KR); Hwang, Hyungsuk, Suwon-si Gyeonggi-do 443-742 (KR)
(74) Representative: Nederlandsch Octrooibureau

(57) **Abstract**

A method and an apparatus for issuing electronic money from an electronic device are provided. The method includes accessing, by a first electronic device, an electronic payment server by executing an electronic payment application, displaying a banking list received from the electronic payment server, displaying a template for creating the electronic money of a specific banking facility selected from the banking list, receiving an input of at least one feature of the electronic money in a template, and transmitting the template including the at least one feature of the electronic money to the electronic payment server to issue the electronic money.

## Description

### TECHNICAL FIELD

The present disclosure relates to issuing electronic money at an electronic device.

### BACKGROUND

Along with the growth of the Internet, various technologies for purchasing and paying for goods in cyber environments have become popular. As a result, various forms of making payments in cyber environments have been developed.

For example, a technique for issuing what is called a barcode check book for goods in cyber environments and a technique for paying for goods by using the barcode check book have been known in the art.

According to these techniques, a user offers payment information to a service apparatus, and then a banking facility makes a payment in response to a demand of the service apparatus. However, these techniques have limitations in purchasing items, the amount of payments, and the like.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and apparatus for issuing electronic money through an electronic device that allows real-time creation and issuance of electronic money in response to a user's intention.

In accordance with an aspect of present disclosure, a method of a system for issuing electronic money from a first electronic device to a second electronic device is provided. The method includes accessing, by the first electronic device, an electronic payment server by executing an electronic payment application, displaying a banking list received from the electronic payment server, displaying a template for creating the electronic money of a specific banking facility selected from the banking list, when at least one banking facility identified in the banking list is selected, receiving an input of at least one feature of the electronic money into a template, and transmitting the template including the at least one feature of the electronic money to the electronic payment server to issue the electronic money.

In accordance with another aspect of present disclosure, an apparatus for issuing electronic money to an electronic device is provided. The apparatus includes a wireless communication unit configured to communicate with an electronic payment server to issue the electronic money, a touch panel configured to detect an input of at least one feature of the electronic money, a display panel configured to display the electronic money and an electronic payment application for allowing the electronic money to be issued, and a control unit configured to access the electronic payment server through the wireless communication unit in response to an execution of the electronic payment application, to control the display panel to display a banking list received from the electronic payment server through the wireless communication unit, to control the display panel to display a template for creating the electronic money of a specific banking facility selected from the banking list, to receive the input of the at least one feature of the electronic money into the template from the touch panel, and to transmit the template including the at least one feature of the electronic money to the electronic payment server through the wireless communication unit to issue the electronic money.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device for issuing electronic money according to an embodiment of the present disclosure;
FIG. 2 is a schematic diagram illustrating a system for using electronic money issued by an electronic device according to an embodiment of the present disclosure;
FIG. 3 is a screenshot showing a screen used for executing an electronic payment application at an electronic device according to an embodiment of the present disclosure;
FIGS. 4A and 4B are flow diagrams illustrating a process of issuing and using electronic money according to various embodiments of the present disclosure;
FIGS. 5A, 5B, 5C, and 5D are screenshots showing various screens associated with a process of issuing and using electronic money according to various embodiments of the present disclosure;
FIG. 6 is a schematic diagram illustrating a system for using electronic money issued through an establishment of a virtual account at an electronic device according to an embodiment of the present disclosure;
FIG. 7 is a flow diagram illustrating a process of using electronic money issued through an establishment of a virtual account at an electronic device according to an embodiment of the present disclosure;
FIG. 8 is a flow diagram illustrating a process of issuing and using electronic money at an electronic device according to an embodiment of the present disclosure; and
FIG. 9 is a flow diagram illustrating a process of responding to a request of an electronic device at an electronic payment server according to an embodiment of the present disclosure.
Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In various embodiments of the present disclosure, the expressions "or" and/or "at least one of A or/and B" include any or all of combinations of words listed together. For example, the expression "A or B" or "at least A or/and B" may include A, may include B, and/or may include both A and B.

The expressions "1," "2," "first," and/or "second" used in various embodiments of the present disclosure may modify various components of the various embodiments but do not limit the corresponding components. For example, the above expressions do not limit the sequence and/or importance of the components. The expressions may be used for distinguishing one component from other components. For example, a first user device and a second user device indicate different user devices although both of them are user devices. For example, without departing from the scope of the present disclosure, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

The terms used in describing various embodiments of the present disclosure are only examples for describing a specific embodiment but do not limit the various embodiments of the present disclosure. Singular forms are intended to include plural forms unless the context clearly indicates otherwise.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure may be a device including a projection function. For example, the electronic device may be one or a combination of a smart phone, a tablet Personal Computer (PC), a mobile phone, a video phone, an e-book reader, a desktop PC, a laptop PC, a netbook computer, a Personal Digital Assistant (PDA), a camera, a wearable device (for example, a Head-Mounted-Device (HMD) such as electronic glasses, electronic clothes, and an electronic bracelet, an electronic necklace, an electronic appcessory, an electronic tattoo, and a smart watch.

According to various embodiments, the electronic device may be a smart home appliance having a projection function. The smart home appliance may include at least one of a TeleVision (TV), a Digital Video Disk (DVD) player, an audio player, an air conditioner, a cleaner, an oven, a microwave oven, a washing machine, an air cleaner, a set-top box, a TV box (for example, Samsung HomeSync™, Apple TV™, or Google TV™), game consoles, an electronic dictionary, an electronic key, a camcorder, and an electronic frame.

According to various embodiments, the electronic device may include at least one of various types of medical devices (for example, Magnetic Resonance Angiography (MRA), Magnetic Resonance Imaging (MRI), Computed Tomography (CT), a scanner, an ultrasonic device and the like), a navigation device, a Global Positioning System (GPS) receiver, an Event Data Recorder (EDR), a Flight Data Recorder (FDR), a vehicle infotainment device, electronic equipment for a ship (for example, a navigation device for ship, a gyro compass and the like), avionics, a security device, a head unit for a vehicle, an industrial or home robot, an Automatic Teller Machine (ATM) of financial institutions, and a Point Of Sale (POS) device of shops.

According to various embodiments, the electronic device may include at least one of furniture or a part of a building/structure, an electronic board, an electronic signature receiving device, a projector, and various types of measuring devices (for example, a water meter, an electricity meter, a gas meter, a radio wave meter and the like) including a projection function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (for example, an artificial intelligence electronic device) which uses an electronic device.

The term "electronic money" used herein refers to a medium used to purchase goods in cyber environments by users. Namely, electronic money issued in cyber environments may be used actually to purchase goods. Such electronic money may be realized in various forms of, for example, but not limited to, a barcode, a QR code, a card, a memo, a virtual account, a cash, a credit card, a check card, a check, and a gift card. Additionally, electronic money may be issued at an electronic device after a payment thereof, or alternatively electronic money may be issued in advance and then paid at the time of purchase of goods.

Further, the term "an electronic payment application" used herein refers to a specific application that offers environments allowing an electronic device to issue and use electronic money. A particular server that operates the electronic payment application will be hereinafter referred to as the term "an electronic payment server".

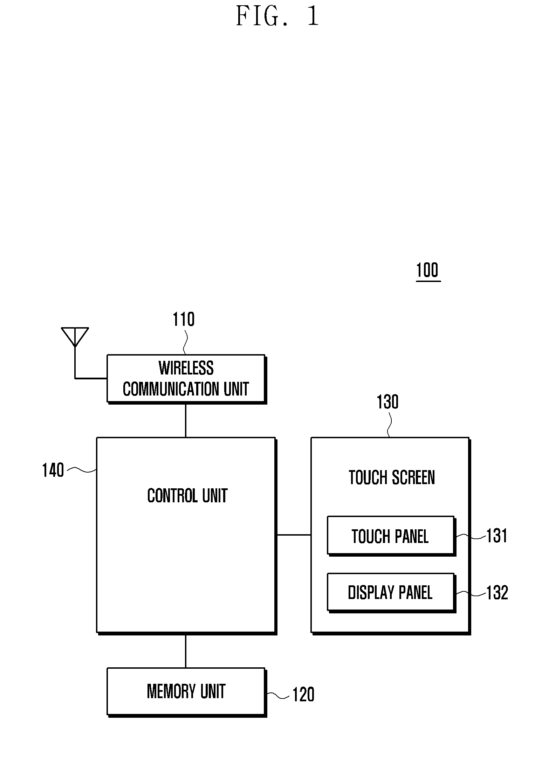

FIGS. 1 through 9, discussed below, and the various embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the present disclosure. Terms first, second, and the like are used to differentiate between objects having the same terminology and are in no way intended to represent a chronological order, unless where explicitly stated otherwise. A set is defined as a non-empty set including at least one element.

FIG. 1 is a block diagram of an electronic device for issuing electronic money according to an embodiment of the present disclosure.

Referring to FIG. 1, an electronic device 100 is illustrated, where the electronic device 100 may include, a wireless communication unit 110, a memory unit 120, a touch screen 130, and a control unit 140. These elements shown in FIG. 1 are, however, not always essential and more or fewer elements may be included. For example, if the electronic device 100 fails to support a communication function, then the wireless communication unit 110 may be omitted.

The wireless communication unit 110 may include at least one module capable of a wireless communication between an electronic device and a wireless communication system or between an electronic device and a network in which other electronic device is located. For example, the wireless communication unit 110 may include a cellular communication module (e.g., Long Term Evolution (LTE), LTE-Advanced (LTE-A), Code Division Multiple Access (CDMA), Wideband CDMA (WCDMA), Universal Mobile Telecommunication System (UMTS), Wireless-Broadband (WiBro), and/or General System for Mobile communications (GSM)), a Wireless Fidelity (Wi-Fi) module, a BlueTooth (BT) module, a Near Field Communication (NFC) module, a Global Positioning System (GPS) module, a Wireless Local Access Network (WLAN) module, a broadcast receiving module, and the like. Particularly, when electronic money is issued and used, the wireless communication unit 110 performs a wireless communication with an electronic payment server and a financial institution server.

The memory unit 120 may store therein a program for the electronic device 100. Particularly, when an electronic payment application for issuing electronic money is installed, the memory unit 120 may store a program that operates the electronic payment application.

The touch screen 130 may be formed of a touch panel 131 and a display panel 132. The touch panel 131 detects a user input for issuing electronic money. For example, the touch panel 131 may detect a touch input in at least one of a capacitive scheme, a resistive scheme, an infrared scheme, or an ultrasonic scheme. Further, the touch panel 131 may be a panel for sensing a user's finger touch and/or an electronic pen touch. Also, the touch panel 131 may further include a control circuitry. The capacitive type touch panel allows a physical contact or proximity detection. The touch panel 131 may further include a tactile layer. For example, the touch panel 131 may offer a tactile response to a user.

The display panel 132 may be, for example, a Liquid Crystal Display (LCD), an Active Matrix Organic Light Emitting Diode (AM-OLED), and/or the like. For example, the display panel 132 may be realized in a flexible, transparent, or wearable form. The touch panel 132 may be formed of a single module together with the touch panel 131.

The control unit 140 controls the overall operation of the electronic device 100. Particularly, the control unit 140 may execute an electronic payment application. When the electronic payment application is executed, the control unit 140 may be connected with an electronic payment server. After connected, the control unit 140 transmits a request for user information approval to the electronic payment server. Then the control unit 140 may receive an approved user's banking list from the electronic payment server and display the received banking list.

If one of banking facilities or a corresponding item is selected from the displayed banking list, the control unit 140 issues electronic money of the selected banking facility through a template. Herein, the template may be offered by the electronic device or produced in a user-specified manner, and receive features of electronic money. When electronic money is issued, the control unit 140 transmits the issued electronic money to a selected electronic device through the electronic payment server. For example, the selected electronic device may be the electronic device 100 (referred to as the first electronic device) that issues electronic money, or any other electronic device (referred to as the second electronic device). If the issued electronic money is received, the control unit 140 may display the received electronic money in the banking list.

Further, the control unit 140 may add the issued electronic money to a usable money list. When electronic money is selected from the usable money list, the control unit 140 transmits features of the selected electronic money to the electronic payment server so as to request approval for the selected electronic money. Thereafter, when payment approved information is received from the electronic payment server, the control unit 140 may use the approved electronic money.

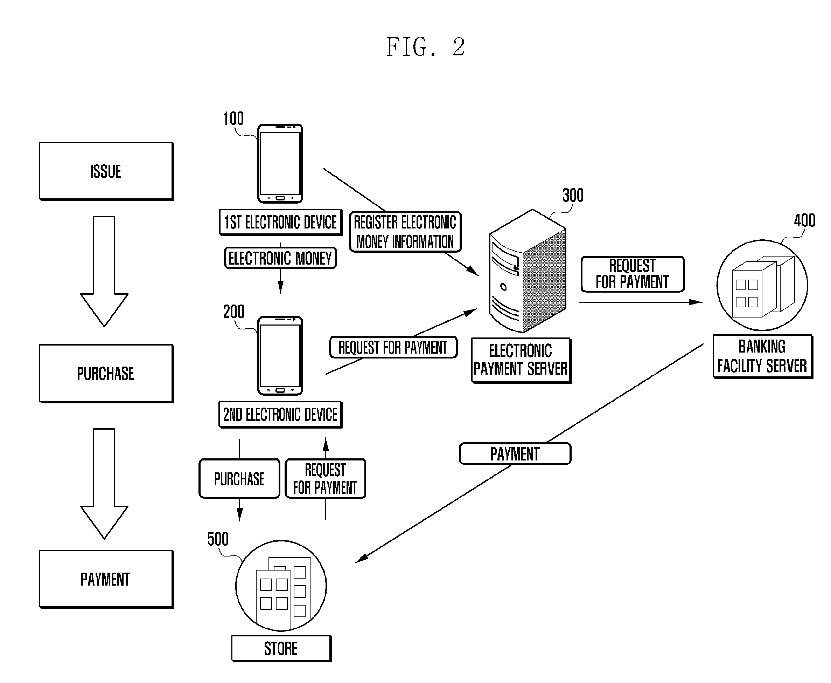

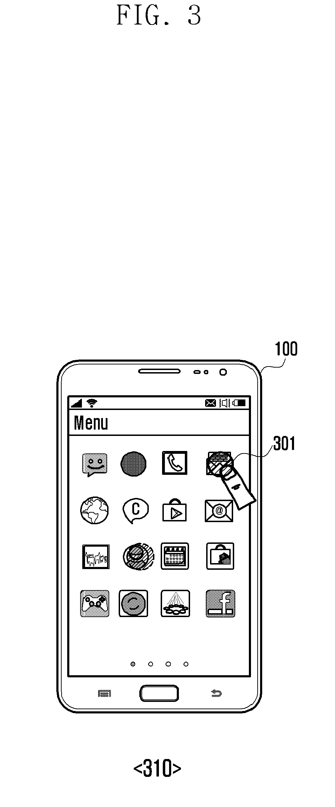

FIG. 2 is a schematic diagram illustrating a system for using electronic money issued by an electronic device according to an embodiment of the present disclosure. FIG. 3 is a screenshot showing a screen used for executing an electronic payment application at an electronic device according to an embodiment of the present disclosure.

Referring to FIGS. 2 and 3, a money using system is illustrated, where the money system may be configured to include a first electronic device 100, a second electronic device 200, an electronic payment server 300, and a banking facility server 400. In this system, a user (hereinafter, referred to as an issuer) who desires to issue electronic money performs the access to an electronic payment application using the first electronic device 100. It will be supposed in the following description that the first electronic device 100 is an issuer's electronic device and the second electronic device 200 is a receiver's electronic device (hereinafter, a user who receives issued electronic money will be referred to as a receiver). The screenshot 310 of the first electronic device illustrated in FIG. 3, for example, illustrates that an issuer selects an icon 301 so as to access an electronic payment application on a menu screen of the first electronic device 100.

Thereafter, in order to request that the electronic payment server 300 approve issuer's personal information, the first electronic device 100 transmits issuer information to the electronic payment server 300. Herein, issuer information is to identify an issuer and may include, but not limited to, an Identification (ID), a password, a name, a resident registration number, a personal certification number, a device serial number, and the like. Further, this issuer information may be transmitted to the electronic payment server 300 for the purpose of registering electronic money information in the electronic payment server 300. If issuer information is approved (e.g., registered) by the electronic payment server 300, the first electronic device 100 receives and displays an issuer's banking list. The issuer's banking list may contain issuer's banking facility items and usable electronic money items.

If at least one banking facility is selected from the issuer's banking list, the first electronic device 100 displays a template for creating electronic money of the selected banking facility. Herein, the template may be a decided template which is offered by the electronic device, or an undecided template which allows a user-specified production. The first electronic device 100 may receive features of electronic money in the template from an issuer. For example, while any installed application (e.g., a memo application offering a decided template) is executed, the first electronic device 100 may receive features of electronic money in a decided template offered by the electronic device.

Additionally, while any installed application (e.g., a gallery application offering an undecided template) is executed, the first electronic device 100 may freely receive features of electronic money in an undecided template allowing a user-specified production. Herein, features of electronic money may be information about an issuer of electronic money (also herein abbreviated to money issuer information), information about a receiver of electronic money (also herein abbreviated to money receiver information), an available period, stores which allow use of electronic money (also herein referred to as available stores), the amount of electronic money, predetermined available goods, transaction information, a receiver's phone number, the title of electronic money, and the like. When an operation of entering such features of electronic money in a template is completed, the first electronic device 100 transmits the template to the electronic payment server 300 in order to issue electronic money.

When issuer information is received together with a request for the approval of issuer information from the first electronic device 100, the electronic payment server 300 may check the received issuer information. Then the electronic payment server 300 transmits an issuer's banking list corresponding to the checked issuer information to the first electronic device 100. Also, when any issued electronic money is received, the electronic payment server 300 checks and stores the features of the issued electronic money. At the same time, the electronic payment server 300 transmits the issued electronic money to the second electronic device 200. As mentioned above, the features of electronic money may be money issuer information, money receiver information, an available period, available stores, the amount of electronic money, transaction information, a receiver's phone number, the title of electronic money, and the like.

Additionally, if a request for using electronic money is received from the second electronic device 200, the electronic payment server 300 determines whether the requested electronic money is usable or not. In case of usable electronic money as a result of determination, the electronic payment server 300 requests payment of electronic money to the banking facility server 400 which corresponds to the electronic money.

The second electronic device 200 which desires to use the received electronic money may transmit features of electronic money to the electronic payment server 300 in order to request payment of electronic money. Then the electronic payment server 300 receiving the features of electronic money transmits a request for payment approval to the banking facility server 400 corresponding to the electronic money. Then the banking facility server 400 determines whether to approve payment, and may send a result of determination to the electronic payment server 300. At the same time, the banking facility server 400 may make a payment to a store 500 at which the second electronic device 200 uses electronic money. Further, when payment approval information is received from the banking facility server 400, the electronic payment server 300 may transmit the received payment approval information to the second electronic device 200.

Additionally, the second electronic device 200 may make a purchase at the store 500 and the store 500 may transmit a request for payment to the second electronic device 200. Accordingly, the request for payment is transmitted from the second electronic device 200 to the electronic payment server 300, and the electronic payment server 300 transmits a request for payment to the banking facility server 400. Then the banking facility server 400 transmits the appropriate payment to the store 500.

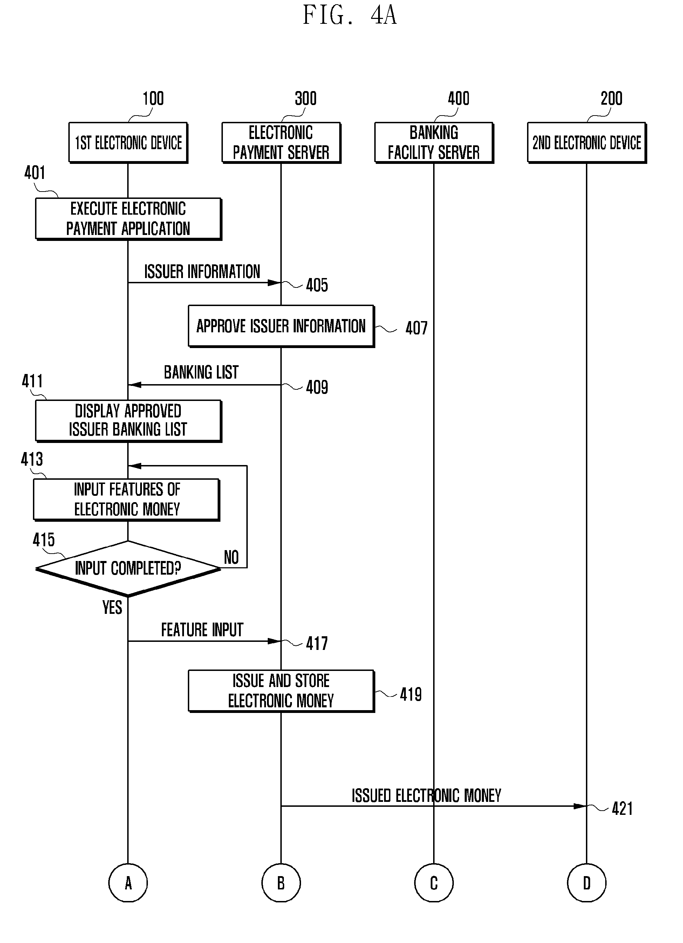

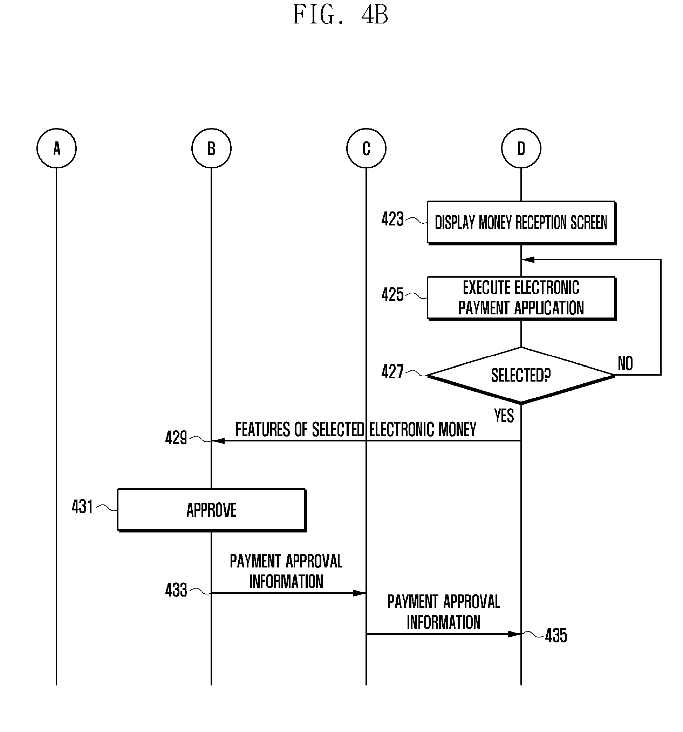

FIGS. 4A and 4B are flow diagrams illustrating a process of issuing and using electronic money according to various embodiments of the present disclosure.

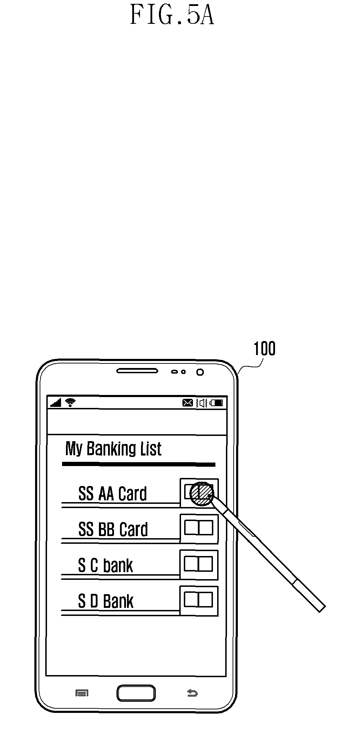

FIGS. 5A to 5D are screenshots showing various screens associated with a process of issuing and using electronic money according to various embodiments of the present disclosure.

Referring to FIG. 4A, operations of a first electronic device 100, an electronic payment server 300, a banking facility server 400 and a second electronic device 200 are illustrated, where the first electronic device 100 executes an electronic payment application at operation 401 and transmits a request for issuer information approval to the electronic payment server 300 at operation 405. The first electronic device 100 may have already installed and joined the electronic payment application offered by the electronic payment server 300. Herein, issuer information indicates specific information for identifying an issuer and may include, for example, an ID, a password, a name, a resident registration number, a personal certification number, a device serial number, and the like.

When such a request for issuer information approval is received from the first electronic device 100, the electronic payment server 300 may check and approve issuer information at operation 407.

Then the electronic payment server 300 may transmit an issuer's banking list as a result of approval to the first electronic device 100 at operation 409. Then the first electronic device 100 displays the received issuer's banking list at operation 411. Herein, such an issuer's banking list contains a credit card, a check card, a check, a gift card, a bankbook account, etc., issued by respective banking facilities and possessed by an issuer, and also contains usable electronic money.

FIG. 5A is a screenshot showing an issuer's banking list and an operation of selecting an item from the issuer's banking list. When the issuer's banking list is displayed as shown in FIG. 5A at operation 411, at operation 413 the first electronic device 100 may receive a selection of at least one banking facility from the display banking list, display a template for creating electronic money of the selected banking facility, and receive an input of features of electronic money in the displayed template. As mentioned above, the template may be a decided template which is offered by the electronic device, or an undecided template which allows a user-specified production. Namely, features of electronic money may be inputted in a template offered by the first electronic device 100 in response to the execution of an application installed in the first electronic device 100, or inputted in a template specified and produced by an issuer when an application installed in the first electronic device 100 is executed.

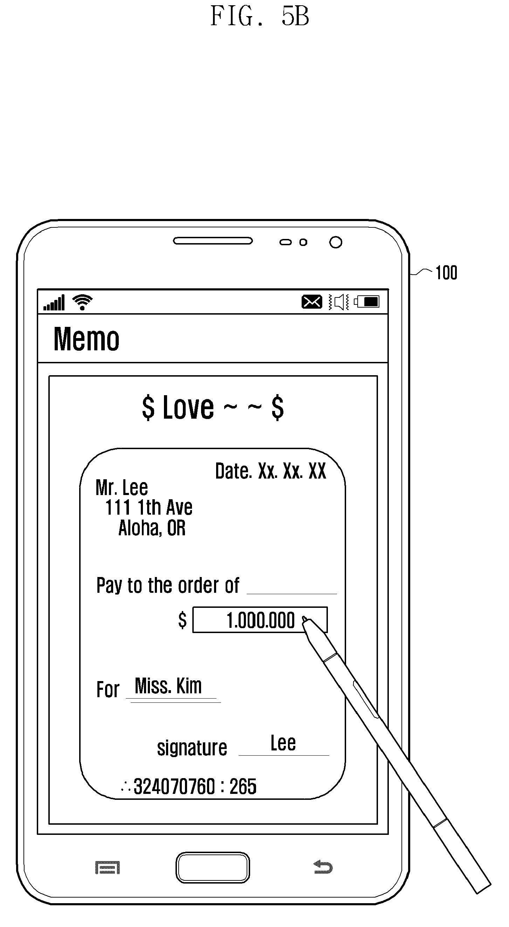

FIG. 5B is a screenshot showing operation of inputting features of electronic money in a decided template after an application installed in the first electronic device 100 is executed. For example, while a memo application is executed, the first electronic device 100 may display a standardized template and receive an input of features of electronic money through the displayed template. This standardized template may have input areas, represented as blanks, underlines, etc., for receiving features of electronic money from a user. Herein, features of electronic money may be money issuer information, money receiver information, an available period, available stores, the amount of electronic money, predetermined available goods, transaction information, a receiver's phone number, the title of electronic money, and the like

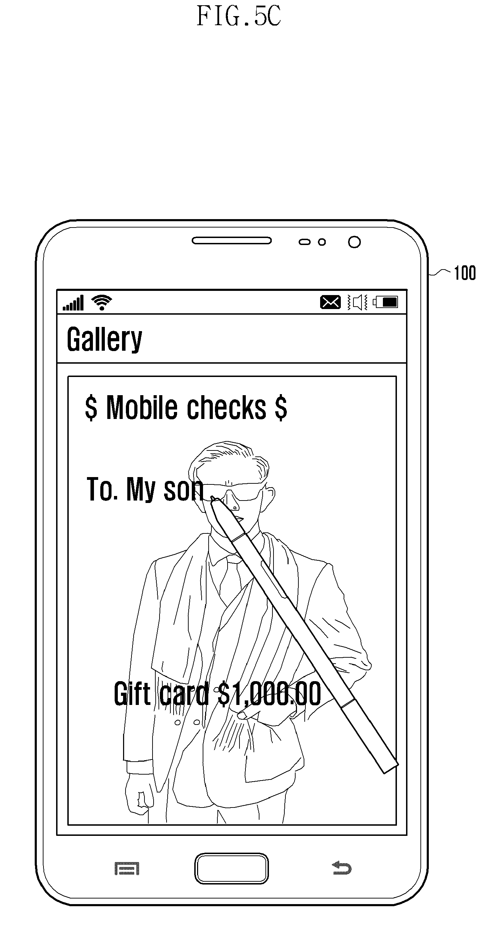

Additionally, FIG. 5C is a screenshot showing operation of inputting features of electronic money in a user-specified template after an application installed in the first electronic device 100 is executed. For example, while the first electronic device 100 executes a gallery application and displays a specific image, a user may produce a template and enter features of electronic money through a finger or touch pen at an undecided position in an undecided form.

When an input of features of electronic money is not completed at operation 415, the first electronic device 100 continues to receive the features of the electronic money in operation 413.

When an input of features of electronic money is completed at operation 415, the first electronic device 100 transmits the feature input of electronic money to the electronic payment server 300 at operation 417. Then, at operation 419, the electronic payment server 300 issues and stores electronic money. Specifically, when issuing electronic money, the electronic payment server 300 may store therein the received features of electronic money (e.g., issuer information (including an ID, a password, and device serial number), receiver information, an available period, the amount of electronic money, transaction information, etc.) together with the issued electronic money. After electronic money is issued, the electronic payment server 300 transmits the issued electronic money to the second electronic device 200 at operation 421.

Next, FIG. 4B shows a process of using electronic money issued in FIG. 4A. Referring to FIG. 4B, when the issued electronic money is received, the second electronic device 200 displays a money reception screen at operation 423. Such a money reception screen may be a screen for showing a receiving state of electronic money, a popup window for notifying the reception of electronic money, a specific icon displayed on a status bar so as to indicate the reception of electronic money, and/or a screen for displaying a banking list received from the electronic payment server 300 after an electronic payment application is executed.

If it is recognized that the above-mentioned popup window or icon is selected from the money reception screen, the second electronic device 200 executes the electronic payment application at operation 425.

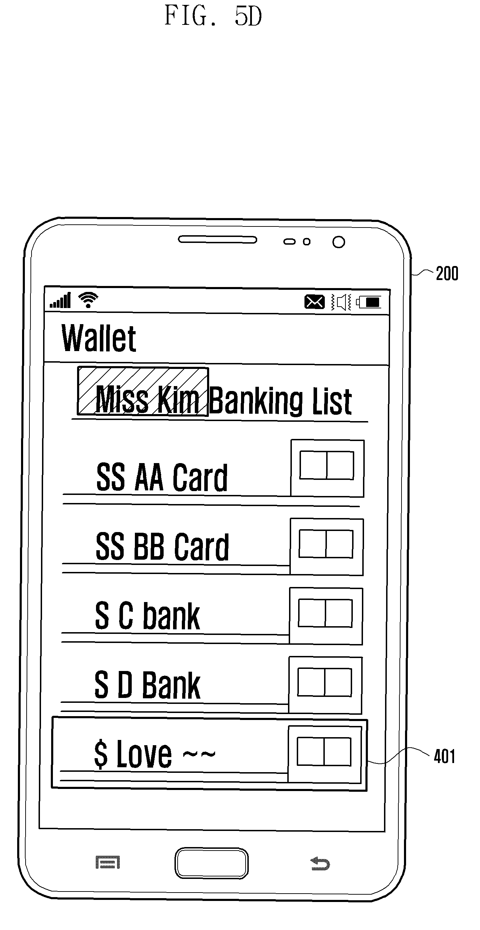

FIG. 5D is a screenshot showing an electronic payment application executed after the issued electronic money is received. Referring to FIG. 5D, the second electronic device 200 that receives the issued electronic money may display, in the form of a list, the received electronic money together with usable electronic money. Namely, as indicated by a reference numeral 401, electronic money received from the first electronic device 100 is added to a currently displayed list that contains usable electronic money items.

Then, if a selection of the received electronic money 401 is not detected at operation 427, the second electronic device 200 continues to perform operation 425.

However, if a selection of the received electronic money 401 is detected at operation 427, the second electronic device 200 transmits features of the selected electronic money to the electronic payment server 300 at operation 429. When the issued electronic money is received from the second electronic device 200, the electronic payment server 300 checks and approves features of the issued electronic money, i.e., banking information, at operation 431.

At operation 431, the electronic payment server 300 may check whether the received banking information is identical to the registered banking information based on the first electronic device 100. If banking information is identical to each other, the electronic payment server 300 transmits payment approval information to the banking facility server 400 at operation 433. Then the banking facility server 400 transmits the received payment approval information to the second electronic device 200 at operation 435. If banking information is not identical to each other at operation 431, the electronic payment server 300 may send the second electronic device 200 a notification message that indicates a disapproval of electronic money and/or a demand for selecting other electronic money.

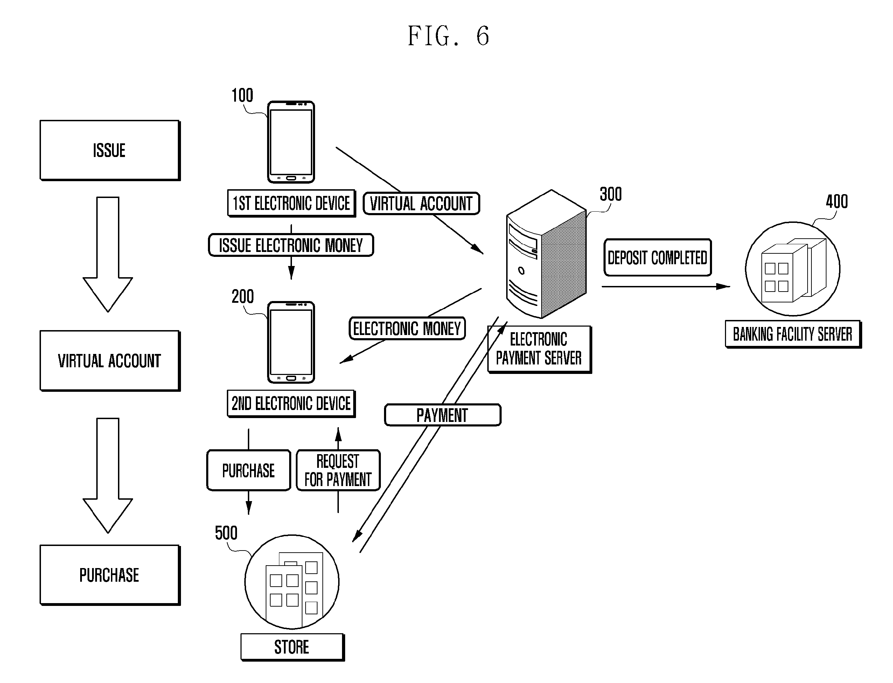

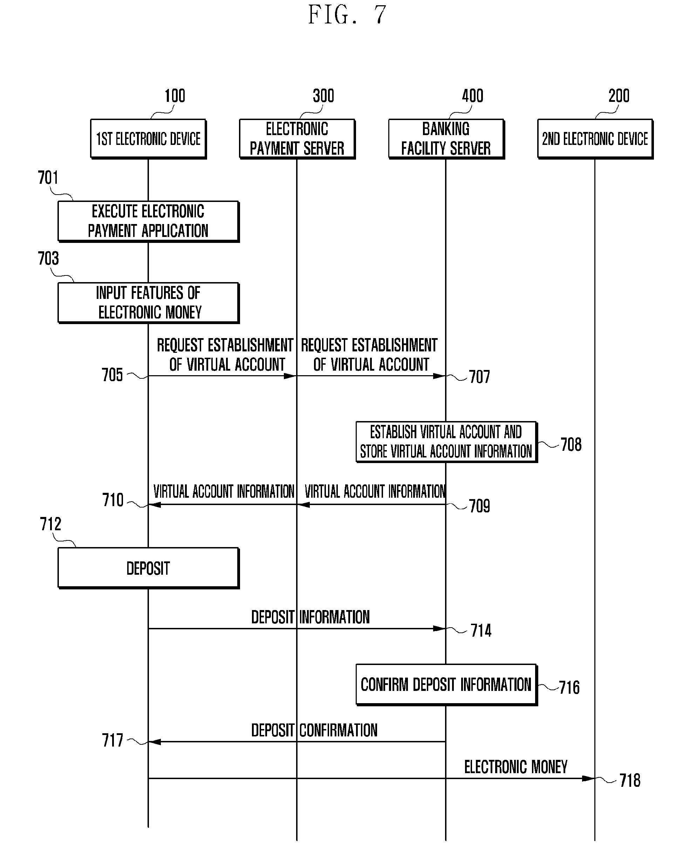

FIG. 6 is a schematic diagram illustrating a system for using electronic money issued through an establishment of a virtual account at an electronic device according to an embodiment of the present disclosure. FIG. 7 is a flow diagram illustrating a process of using electronic money issued through an establishment of a virtual account at an electronic device according to an embodiment of the present disclosure.

Referring to FIG. 6, a money using system is illustrated, where the money using system may be configured to include a first electronic device 100, a second electronic device 200, an electronic payment server 300, a banking facility server 400, and a store 500. As shown in FIGS. 6 and 7, the first electronic device 100 is an issuer's electronic device that issues electronic money, and the second electronic device 200 is a receiver's electronic device that receives and uses electronic money.

The first electronic device 100 performs access to an electronic payment application installed in advance to issue electronic money. Also, the first electronic device 100 transmits an approval request for issuer's information registration to the electronic payment server 300. And also, the first electronic device 100 receives an input of features of electronic money through a template from a user and transmits the received features to the electronic payment server 300 in order to issue electronic money.

When receiving an input of features of electronic money, the first electronic device 100 may select a payment manner. For example, the first electronic device 100 may use a virtual account as a payment manner and transmit information regarding the virtual account to the electronic payment server 300. Herein, a virtual account refers to a temporary banking relationship established for easy financial transactions and assigned to an issuer through the electronic payment server 300 by the banking facility server 400.

Namely, the electronic payment server 300 may receive a virtual account from the banking facility server 400 and offer it to an issuer's electronic device. The electronic payment server 300 may predefine information about an issuer, a user, the amount of deposit, an account number, etc. in a virtual account. If the first electronic device 100 makes the deposit in a virtual account so as to issue electronic money, the electronic money is issued and transmitted to the second electronic device 200.

In response to a request for establishment of a virtual account from the first electronic device 100, the electronic payment server 300 transmits virtual account information to the first electronic device 100. Also, when deposit information is received from the first electronic device 100, the electronic payment server 300 transmits issued electronic money to the second electronic device 200. Thereafter, if a request for use of the issued electronic money is received from the second electronic device 200, the electronic payment server 300 makes a payment to the store 500 from a virtual account of the second electronic device 200.

The second electronic device 200 transmits a request for use of electronic money to the electronic payment server 300 so as to use the issued electronic money. After the use of electronic money is approved by the electronic payment server 300, the second electronic device 200 can use freely the issued electronic money until the deposit of a virtual account is exhausted completely. When the second electronic device 200 uses the issued electronic money, the electronic payment server 300 makes a payment to the store 500 from a virtual account of the second electronic device 200.

The banking facility server 400 receives a request for establishment of a virtual account from the first electronic device 100, establishes a virtual account, and transmits account information to the first electronic device 100. Also, the banking facility server 400 receives deposit information of the established virtual account from the first electronic device 100, confirms the received deposit information, and transmits deposit confirmation to the electronic payment server 300. And also, the banking facility server 400 receives a request for use of electronic money from the second electronic device 200, and transmits a request for payment to the electronic payment server 300. Thereafter, if payment approval information (e.g., deposit completed information) is received from the electronic payment server 300, the banking facility server 400 transmits the received payment approval information to the second electronic device 200. When the second electronic device 200 receives the payment approval information, the store 500 receives a payment from the electronic payment server 300.

Additionally, the second electronic device 200 may make a purchase at the store 500 and the store 500 may transmit a request for payment to the second electronic device 200.

Referring to FIG. 7, operations of a first electronic device 100, an electronic payment server 300, a banking facility server 400 and a second electronic device 200 are illustrated, where the first electronic device 100 executes an electronic payment application at operation 701 and receives an input of features of electronic money at operation 703. This operation of receiving the feature input may be similar to the above-discussed operations 405 to 415 in FIG. 4.

Thereafter, in order to issue electronic money, the first electronic device 100 transmits a request for establishment of a virtual account to the electronic payment server 300 at operation 705. At this time, the first electronic device 100 may also send information associated with a virtual account. Herein, virtual account information may include issuer information, receiver information, banking facility information, the amount of deposit, and the like. The electronic payment server 300 stores therein the received virtual account information.

Then the electronic payment server 300 transmits the received request for establishment of a virtual account to the banking facility server 400 at operation 707. Then, at operation 708, the banking facility server 400 establishes a virtual account based on the received virtual account information and stores therein the virtual account information.

Thereafter, at operation 709, the banking facility server 400 may transmit information about the established virtual account to the electronic payment server 300. Then the electronic payment server 300 transmits the received virtual account information to the first electronic device 100 at operation 710.

Thereafter, the first electronic device 100 may make the deposit in the virtual account at operation 712. Then, at operation 714, the first electronic device 100 transmits deposit information to the electronic payment server 300, and the electronic payment server 300 transfers the received deposit information to the banking facility server 400.

Then the banking facility server 400 confirms the received deposit information at operation 716 and transmits deposit confirmation to the electronic payment server 300 at operation 717. Then electronic payment server 300 transfers the deposit confirmation to the first electronic device 100.

Then, at operation 718, the first electronic device 100 transmits electronic money, paid using a virtual account, to the second electronic device 200 through the electronic payment server 300.

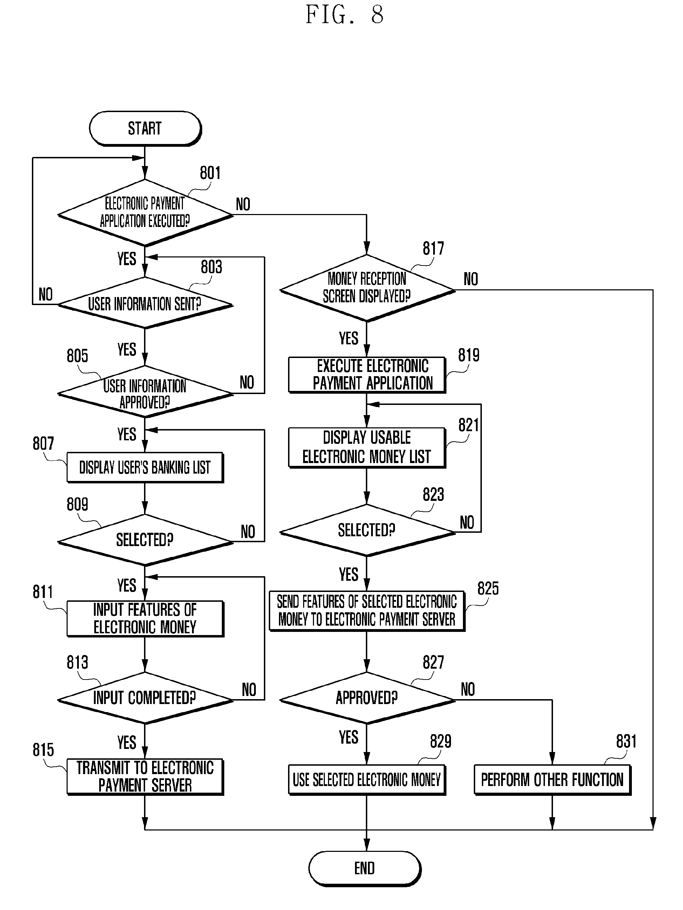

FIG. 8 is a flow diagram illustrating a process of issuing and using electronic money at an electronic device according to an embodiment of the present disclosure.

Referring to FIG. 8, a diagram is illustrated, where according to the diagram a control unit 140, as illustrated in FIG. 1, may execute an electronic payment application at operation 801.

Further, at operation 803, after the electronic payment application is execute din operation 801, the control unit 140 checks whether user's personal information, which is required for approval of user information, is transmitted to an electronic payment server 300 as illustrated in FIG. 6. Herein, the electronic payment server 300 is a specific server for operating the electronic payment application and may include a server for authenticating an electronic device. Also, user's personal information is to identify a user and may include, but not limited to, an ID, a password, a name, a resident registration number, a personal certification number, a device serial number, and the like. If the user information is not sent in operation 803, then the process returns to operation 810.

Next, at operation 805, after the user information is sent in operation 803, the control unit 140 checks whether a user's banking list is received according to approval of user information from the electronic payment server 300. For this, the electronic payment server 300 stores therein user's personal information which has been already registered by a user. If there is no registered user information, the first electronic device 100 may register user's personal information.

When the user information is not approved, the process returns to operation 803. When the user information is approved and thus a user's banking list is received, the control unit 140 displays the user's banking list at operation 807. Herein, such a user's banking list refers to a list of a credit card, a check card, a check, a gift card, a bankbook account, etc., issued by respective banking facilities and possessed by a user.

While the banking list is displayed, the control unit 140 determines at operation 809 whether at least one banking facility is selected for payment of electronic money to be issued. If at least one banking facility is not selected, then the process returns to operation 807. If at least one banking facility is selected from the displayed banking list, the control unit 140 receives an input of features of electronic money through a template at operation 811.

Herein, the template may be a standardized template which is offered by the electronic device, or a non-standardized template which allows a user-specified production. In the former case, the control unit 140 controls an application to basically offer a template and controls the template to receive an input of features of electronic money. In the latter case, the control unit 140 controls a free input of features of electronic money. Herein, features of electronic money may be money issuer information, money receiver information, an available period, available stores, the amount of electronic money, predetermined available goods, transaction information, a receiver's phone number, the title of electronic money, and the like. Additionally, a receiver of electronic money may be a user's electronic device (i.e., the first electronic device 100) or any other user's electronic device (i.e., the second electronic device 200).

When the operation of entering features of electronic money in a template is completed, the control unit 140 detects it at operation 813 and transmits electronic money having a complete feature input to the electronic payment server 300 at operation 815. In contrast, when the input is not completed at operation 813, the process returns to operation 811.

Meanwhile, if the electronic payment application is not executed t operation 801, the control unit 140 checks at operation 817 whether electronic money is received. A money reception screen may be a screen for showing a state or process of receiving electronic money, a popup window for notifying the reception of electronic money, or a specific icon displayed on a status bar so as to indicate the reception of electronic money.

When the money reception screen is displayed, the control unit 140 executes an electronic payment application at operation 819. For example, if a selection of the popup window is detected, the control unit 140 may execute the electronic payment application. In contrast, if the money reception screen is not displayed in operation 817, the process is terminated.

After the execution of the electronic payment application in operation 819, the control unit 140 may display at operation 821 the received electronic money by adding it to a list of usable electronic money. This list may be received from the electronic payment server 300 when the electronic payment application is executed.

The control unit 140 detects a selection of electronic money from the usable electronic money list at operation 823, and the process returns to operation 821 if a selection of the electronic money is not made. In contrast, if the selection of the electronic money is made in operation 823, the control unit 140 transmits features of the selected electronic money to the electronic payment server 300 at operation 825 so as to use the electronic money, when the selection is made in operation 823.

Then, if it is checked at operation 827 that use of the electronic money is approved by the electronic payment server 300, the control unit 140 may use the selected and approved electronic money at operation 829. Meanwhile, if it is checked at operation 827 that use of the electronic money is disapproved, the control unit 140 may perform another function, such as displaying at operation 831 a notification message or popup that indicates unavailability of electronic money and/or a demand for selecting other electronic money.

As discussed hereinbefore, the first electronic device 100 not only may issue electronic money, but also may receive any issued electronic money.

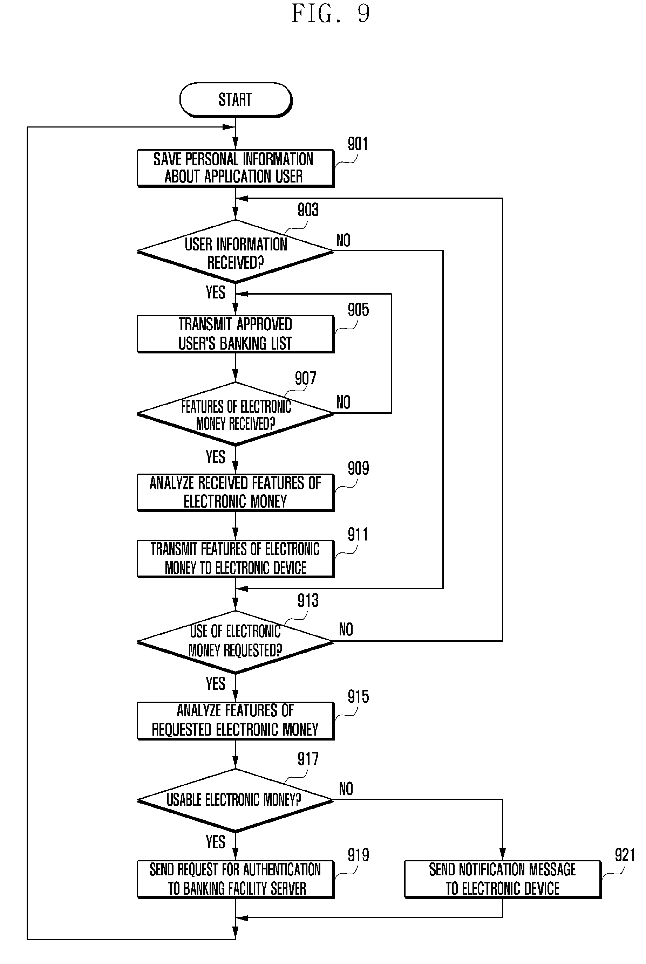

FIG. 9 is a flow diagram illustrating a process of responding to a request of an electronic device at an electronic payment server according to an embodiment of the present disclosure.

Referring to FIG. 9, a process of an electronic payment server 300, as illustrated in FIG. 6 is illustrated, where the electronic payment server 300 may store, at operation 901, personal information about a user using an electronic payment application. Herein, user's personal information may be information registered by a user who installs the electronic payment application, and may include an ID, a password, a name, a resident registration number, a personal certification number, a device serial number, and the like.

If user's personal information is received from an electronic device (e.g., the first electronic device 100) at operation 903, the electronic payment server 300 approves a user through an authentication process and transmits an approved user's banking list to the electronic device (e.g., the first electronic device 100) at operation 905. Herein, a user's banking list may contain a list of a credit card, a check card, a check, a gift card, a bankbook account, etc., issued by banking facilities and possessed by a user and may also contain usable electronic money. If there is no user identical to any stored user, the electronic payment server 300 may transmit a request for registration of user information. If the user's personal information is not received in operation 903, then the process proceeds to operation 913, which is described in detail below.

Next, after operation 905, if features of electronic money to be issued are received from an electronic device (e.g., the first electronic device 100) at operation 907, the electronic payment server 300 analyzes the received features of electronic money at operation 909. In contrast, if the features of the electronic money are not received in operation 907, then the process proceeds to operation 905.

The electronic payment server 300 transmits the analyzed features of electronic money to a receiver's electronic device at operation 911. Herein, features of electronic money may be money issuer information, money receiver information, an available period, available stores, the amount of electronic money, predetermined available goods, transaction information, a receiver's phone number, the title of electronic money, and the like.

Next, if a request for use of electronic money is received at operation 913, the electronic payment server 300 analyzes features of the requested electronic money at operation 915 and checks at operation 917 whether the requested electronic money is usable. If the use of electronic money is not requested at operation 913, then the process returns to operation 903.

At operation 917, the electronic payment server 300 may check an available period of the electronic money, the amount of the electronic money, and whether it corresponds to any predetermined available good. If the electronic money is usable, the electronic payment server 300 sends a request for authentication to the banking facility server 400 at operation 919 and then notifies a result of authentication to an electronic device (e.g., the second electronic device 200) that requests use of electronic money.

If the electronic money is not usable in operation 917, then the process performs operation 921, in which the electronic payment server 300 may send the second electronic device 200 a notification message or popup that indicates unavailability of electronic money and/or a demand for selecting other electronic money, and then return to operation 901.

As discussed hereinbefore, the electronic device according to various embodiments of the present disclosure may allow real-time creation and issuance of electronic money. Such electronic money can be offered to another person at any time, and such a person who receives electronic money can easily use electronic money.

Additionally, a user who desires to issue electronic money can produce various forms of electronic money by freely selecting and specifying features of electronic money such as a receiver, the amount of electronic money, an available period, a purchase item, and the like.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of a system for issuing electronic money from a first electronic device to a second electronic device, the method comprising:
accessing, by the first electronic device, an electronic payment server by executing an electronic payment application;
displaying a banking list received from the electronic payment server;
displaying a template for creating the electronic money of a specific banking facility selected from the banking list, when at least one banking facility identified in the banking list is selected;
receiving an input of at least one feature of the electronic money into a template; and
transmitting the template including the at least one feature of the electronic money to the electronic payment server to issue the electronic money.

2. The method of claim 1, wherein the second electronic device includes a smart phone, a tablet personal computer, a mobile phone, a video phone, an e-book reader, a desktop personal computer, a laptop personal computer, a netbook computer, or a notebook, wherein the at least one feature of the electronic money is associated with at least one of a barcode, a QR code, a card, a memo, a virtual account, cash, a credit card, a check card, a check, and a gift card.

3. The method of claim 1, further comprising:
adding the issued electronic money to the displayed banking list;
transmitting the at least one feature of the issued electronic money to the electronic payment server when the issued electronic money is selected; and
using the issued electronic money at the electronic device or registering the issued electronic money as usable electronic money at the electronic device when financial information about the issued electronic money is received from the electronic payment server.

4. The method of claim 1, further comprising:
offering the template by the electronic device or producing the template by a user,
wherein after the template is transmitted from the first electronic device and after the electronic payment server approves the electronic money, the electronic money is transmitted to the electronic device.

5. The method of claim 4, wherein the template offered by the electronic device is a standardized template which allows the input of the at least one feature of the electronic money and is displayed by the electronic payment application.

6. The method of claim 1, wherein the displaying of the banking list includes:
transmitting a request for user information approval to the electronic payment server when the electronic payment application is executed; and
displaying the banking list received from the electronic payment server when the electronic payment server approves user information,
transmitting a request for an establishment of a virtual account to the electronic payment server when the electronic payment server approves the user information; and
issuing the electronic money by using financial information of the virtual account received from the electronic payment server.

7. The method of claim 1, wherein the at least one feature of the electronic money includes at least one of money issuer information, money receiver information, an available period, available stores, an amount of electronic money, transaction information, a receiver's phone number, and a title of electronic money.

8. A method for issuing electronic money from an electronic payment server, the method comprising:
storing, by the electronic payment server, user information about an electronic payment application;
in response to a connection with an electronic device that executes the electronic payment application, transmitting a banking list to the electronic device by based on the user information;
when a template including an input of at least one feature of the electronic money is received from the electronic device, saving the at least one feature of the electronic money; and
transmitting the electronic money based on the at least one feature input to the electronic device.

9. An apparatus for issuing electronic money to an electronic device, the apparatus comprising:
a wireless communication unit configured to communicate with an electronic payment server to issue the electronic money;
a touch panel configured to detect an input of at least one feature of the electronic money;
a display panel configured to display the electronic money and an electronic payment application for allowing the electronic money to be issued; and
a control unit configured:
to access the electronic payment server through the wireless communication unit in response to an execution of the electronic payment application;
to control the display panel to display a banking list received from the electronic payment server through the wireless communication unit;
to control the display panel to display a template for creating the electronic money of a specific banking facility selected from the banking list;
to receive the input of the at least one feature of the electronic money into the template from the touch panel; and
to transmit the template including the at least one feature of the electronic money to the electronic payment server through the wireless communication unit to issue the electronic money.

10. The apparatus of claim 9, wherein the electronic device includes a smart phone, a tablet personal computer, a mobile phone, a video phone, an e-book reader, a desktop personal computer, a laptop personal computer, a netbook computer, or a notebook, wherein the at least one feature of the electronic money is associated with at least one of a barcode, a QR code, a card, a memo, a virtual account, cash, a credit card, a check card, a check, and a gift card.

11. The apparatus of claim 9, wherein the control unit is further configured:
to control the display panel to add the issued electronic money to the displayed banking list, to control the wireless communication unit to transmit the at least one feature of the issued electronic money to the electronic payment server when the issued electronic money is selected; and
to use the issued electronic money at the electronic device or register the issued electronic money as usable electronic money at the electronic device when financial information about the issued electronic money is received from the electronic payment server.

12. The apparatus of claim 9, wherein the control unit is further configured:
to offer the template as a decided template or to control the template to be produced as an undecided template by a user; and
when the template is offered as the decided template which allows the input of the at least one feature of the electronic money, to control the template to be displayed by the electronic payment application.

13. The apparatus of claim 9, wherein the control unit is further configured:
to control the wireless communication unit to transmit a request for user information approval to the electronic payment server when the electronic payment application is executed; and
to control the display panel to display the banking list received from the electronic payment server when the electronic payment server approves user information, wherein the control unit is further configured:
to control the wireless communication unit to transmit a request for an establishment of a virtual account to the electronic payment server when the electronic payment server approves the user information, and
to issue the electronic money by using financial information of the virtual account received from the electronic payment server.

14. The apparatus of claim 9, wherein the at least one feature of the electronic money includes at least one of money issuer information, money receiver information, an available period, available stores, an amount of electronic money, transaction information, a receiver's phone number, and a title of electronic money.

15. An apparatus for issuing electronic money at an electronic payment server, the apparatus comprising elements configured to:
store user information about an electronic payment application;
in response to a connection with an electronic device that executes the electronic payment application, transmit a banking list to the electronic device by checking the user information;
receive a template including an input of at least one feature of electronic money from the electronic device; and
transmit the electronic money based on the input feature to the electronic device.
